# EUROPEAN PATENT APPLICATION

(11) **EP 4 586 676 A1**
(43) Date of publication of application: **16.07.2025**
(21) Application number: 23862705.3
(22) Date of filing: 27.04.2023
(51) Int. Cl.: H04W 24/10, H04W 16/28, H04W 48/16, H04W 88/08

(54) **BASE STATION DEVICE, CONTROL METHOD, AND PROGRAM**

(30) Priority: 09.09.2022 JP 2022143898
(71) Applicant: KDDI Corporation, Tokyo 163-8003 (JP)
(72) Inventor: TSUKAMOTO, Yuu, Fujimino-shi, Saitama 356-8502 (JP); SHINBO, Hiroyuki, Fujimino-shi, Saitama 356-8502 (JP)
(74) Representative: Mathys & Squire
(86) International application number: PCT/JP2023/016598
(87) International publication number: WO 2024/053156

(57) **Abstract**

A base station apparatus includes a communication unit configured to communicate with one or more UEs using a plurality of connected wireless APs, the communication unit communicating, for each UE, with the UE using a wireless AP group (AP cluster) selected for the UE by a control apparatus (external node) from among the plurality of wireless APs. The base station apparatus obtains, for each UE, information relating to an RSRP corresponding to a UE between the UE and each of the plurality of wireless APs on a basis of a SRS signal transmitted from the UE and received by the plurality of wireless APs. The base station apparatus notifies the control apparatus (external node) of the obtained information relating to the RSRP for each UE.

## Description

### TECHNICAL FIELD

The present invention relates to a base station apparatus connected to a plurality of wireless access points, a control method, and a program.

### BACKGROUND ART

In the field of next generation systems (Beyond 5G) after the fifth generation mobile communication system (5G), Cell-free massive MIMO (CF-mMIMO) has been looked into as a communication method for reducing interference between cells and enabling user throughput to be made uniform (for example, NPL 1). With CF-mMIMO, radio signals are transmitted and received between a plurality of dispersed wireless access points (AP) and user equipment (UE), and a central processing unit (CPU) collectively processes the signals transmitted and received by the plurality of wireless APs. In this manner, the wireless APs cooperate so that optimization of the wireless signals can be performed for each UE via spatial multiplexing.

NPL 1 proposes, in the field of CF-mMIMO, AP clustering technology for selecting a wireless AP group to use in the transmitting and receiving of data for each UE to reduce the signal processing in a CPU. With this AP clustering technology, for each UE, a combination of wireless APs corresponding to the minimum required to maintain the wireless communication quality is selected, and the selected wireless AP group is defined as an AP cluster. By executing signal processing relating to AP clustering for each UE, the amount of signal processing in the CPU can be reduced, and the wireless communication quality for each UE can be maintained.

### CITATION LIST

### PATENT LITERATURE

NPL 1: "Scalable Cell-Free Massive MIMO Systems", IEEE Transactions on Communications, vol. 68, no. 7, pp. 4247-4261, July 2020.
NPL 2: O-RAN.WG3.E2SM-KPM-v02.02
NPL 3: 3GPP TS28.552, V17.7.1 (2022-06)

### SUMMARY OF INVENTION

### TECHNICAL PROBLEM

In the technology described above, control of AP clustering per UE may be executed on the basis of the received power (reference signal received power (RSRP)) of a reference signal received by each UE from each one of the plurality of wireless APs. For example, in a case where a synchronization signal (SS) is transmitted as a reference signal by the plurality of wireless APs, so that the RSRP corresponding to each wireless AP can be obtained by the UE, each wireless AP needs to transmit a different synchronization signal. However, in a case where the plurality of wireless APs are densely arranged, there is a possibility that the interference between synchronization signals is great and the RSRP obtaining accuracy is reduced. Also, allocating orthogonal radio resources to synchronization signals to prevent interference between the synchronization signals leads to the consumption of a large amount of radio resources.

Accordingly, the present invention provides technology, for a base station apparatus that uses a plurality of wireless APs, that enables a reference signal received power (RSRP) for each UE to be obtained without using a synchronization signal.

### SOLUTION TO PROBLEM

A base station apparatus according to one aspect of the present invention is a base station apparatus connected to a plurality of wireless access points (APs), comprising: communication means for communicating with one or more wireless terminals using the plurality of wireless APs, the communication means communicating, for each wireless terminal, with the wireless terminal using a wireless AP group selected for the wireless terminal by an external node from among the plurality of wireless APs; obtaining means for obtaining, for each wireless terminal, information relating to a reference signal received power (RSRP) corresponding to a wireless channel between the wireless terminal and each of the plurality of wireless APs on a basis of a sounding reference signal (SRS) transmitted from the wireless terminal and received by the plurality of wireless APs; and notification means for notifying the external node of the information, obtained by the obtaining means, relating to the reference signal received power for each wireless terminal.

### ADVANTAGEOUS EFFECTS OF INVENTION

According to the present invention, it becomes possible for a base station apparatus that uses a plurality of wireless APs to obtain a reference signal received power (RSRP) for each UE without using a synchronization signal.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.

FIG. 1 is a block diagram illustrating an example of the configuration of a radio access network.
FIG. 2 is a diagram illustrating an example of an AP cluster setting for each UE.
FIG. 3 is a block diagram illustrating an example of the hardware configuration of a base station apparatus.
FIG. 4 is a block diagram illustrating an example of the functional configuration of the base station apparatus.
FIG. 5 is a sequence diagram illustrating the process of processing for obtaining the RSRP information for each UE (comparative example).
FIG. 6 is a sequence diagram illustrating the process of processing for obtaining the RSRP information for each UE.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### <Wireless Access Network Configuration>

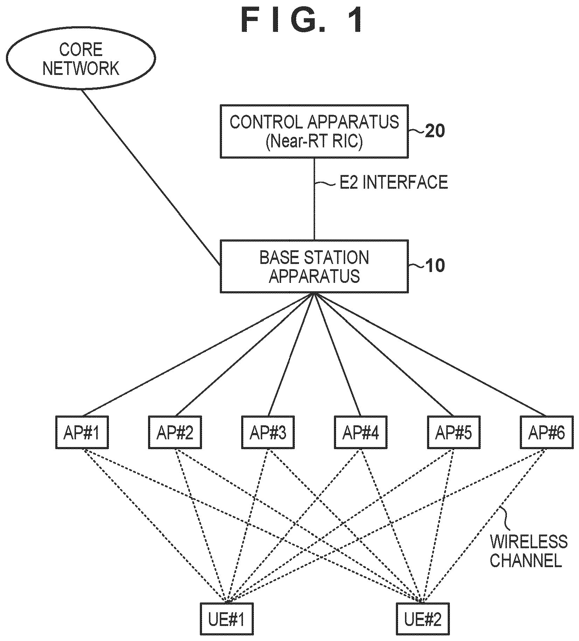

FIG. 1 illustrates an example of the configuration of a radio access network (RAN) according to an embodiment of the present disclosure. The RAN illustrated in FIG. 1 includes a base station apparatus 10 connected to a plurality of wireless access points (APs), and a control apparatus 20. The RAN according to the present embodiment, for example, may be a RAN using O-RAN (Open RAN), and a Near-RT RIC (Near-Real Time RAN Intelligent Controller) in the O-RAN may be installed in the control apparatus 20. Also, the base station apparatus 10 may be installed with an O-DU (O-RAN Distributed Unit) or an O-CU (O-RAN Central Unit) in the O-RAN. The base station apparatus 10 and the control apparatus 20 may communicate via an E2 interface in the O-RAN (NPL 2). The base station apparatus 10 is also connected to a core network (CN). Note that each wireless AP is provided with one or more antennas.

The base station apparatus 10 is connected to a plurality of dispersed wireless APs (in the present example, six APs numbered #1 to #6) and enables MIMO communication via Cell-free massive MIMO (CF-mMIMO) using the plurality of wireless APs. The base station apparatus 10 uses the plurality of wireless APs to communicate with a user equipment (UE) (in the present example, UE #1 and UE #2), which is a wireless terminal. Specifically, the base station apparatus 10 communicates with each user equipment (UE) using a wireless AP group formed of an AP cluster that has been set for the UE. The base station apparatus 10 executes signal processing collectively for the radio signals transmitted and received by the wireless AP group formed of an AP cluster in the communication with the UE. The base station apparatus 10 may execute signal processing such as SU-MIMO (Single User MIMO), MU-MIMO (Multi-User MIMO), or the like as the signal processing for the AP cluster.

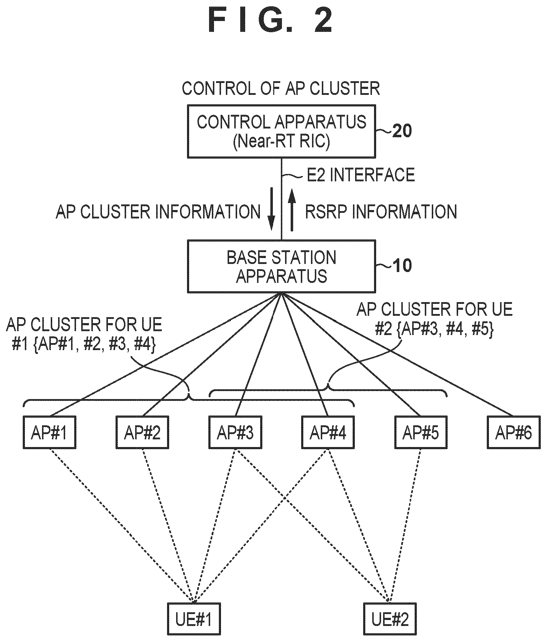

In the present embodiment, setting (selecting) the AP cluster for each UE may be performed by the control apparatus 20. As illustrated in FIG. 2, the base station apparatus 10, for each UE, collects (obtains) information (RSRP information) relating to the RSRP corresponding to the plurality of wireless APs and notifies the control apparatus 20 of the collected RSRP information. The RSRP information may be notified via the E2 interface.

On the basis of the notified RSRP information, the control apparatus 20 selects a wireless AP group for a UE corresponding to the RSRP information from among the plurality of wireless APs (APs #1 to #6) and sets the selected wireless AP group as the AP cluster for the UE. For example, the control apparatus 20 may select, from among the plurality of wireless APs (APs #1 to #6), the wireless AP corresponding to the highest RSRP and one or more wireless APs corresponding to an RSRP with a difference from the highest RSRP that is equal to or less than a predetermined threshold, as the AP cluster. The control apparatus 20 notifies the base station apparatus 10 of AP cluster information (AP group information) indicating the set AP cluster. The base station apparatus 10 uses the wireless AP group indicated by the AP cluster information notified from the control apparatus 20 to communicate with the UE corresponding to the AP cluster information.

In the example of FIG. 2, the AP cluster for the UE #1 and the AP cluster for the UE #2 are set by the control apparatus 20. In the present example, as the AP cluster for UE #1, an AP cluster including the four wireless APs #1 to #4 is set. Also, as the AP cluster for UE #2, an AP cluster including the three wireless APs #3 to #5 is set. In this case, the base station apparatus 10 communicates with the UE #1 using the APs #1 to #4 and communicates with the UE #2 using the APs #3 to #5.

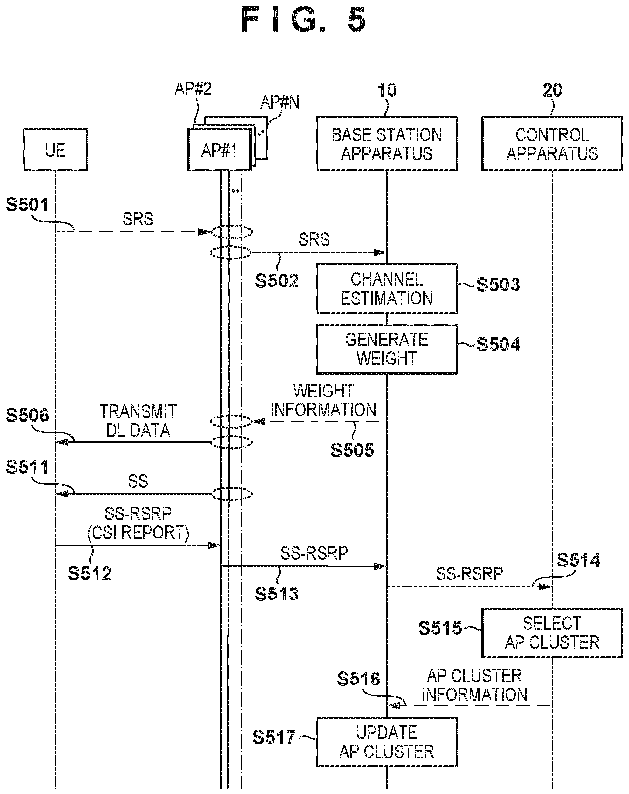

The notification of the RSRP information from the base station apparatus 10 to the control apparatus 20 (Near-RT RIC) is performed via the E2 interface. The E2 interface of the O-RAN uses a notification of Performance Measurements information as specified in 3GPP TS28.552 (NPL 3). In 3GPP TS28.552, a measurement value SS-RSRP of the received power (RSRP) of a synchronization signal (SS) is specified as the RSRP information. Thus, it is assumed that, via the E2 interface (as in the comparative example illustrated in FIG. 5 described below), the control apparatus 20 is notified of the RSRP information relating to SS-RSRP by the base station apparatus 10. In this case, the plurality of wireless APs transmit a synchronization signal (SS) as a reference signal, and an RSRP (SS-RSRP) corresponding to each wireless AP is obtained at each UE.

As described above, in order so an RSRP corresponding to each wireless AP to be obtained at the UEs, each wireless AP needs to transmit a different synchronization signal. However, in a case where the plurality of wireless APs are densely arranged, there is a possibility that the interference between synchronization signals is great and the RSRP obtaining accuracy is reduced. Also, allocating orthogonal radio resources to synchronization signals to prevent interference between the synchronization signals leads to the consumption of a large amount of radio resources.

Accordingly, as described in detail below, in the base station apparatus 10 according to the present embodiment, an RSRP is obtained on the basis of a sounding reference signal (SRS) transmitted from each UE, so as to enable the RSRP for each UE to be obtained without using a synchronization signal.

### <Base Station Apparatus Configuration>

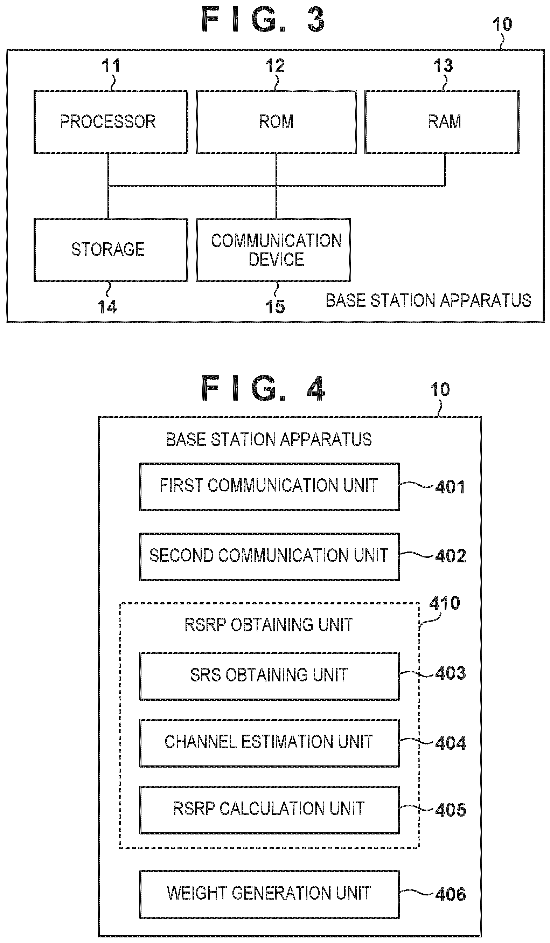

FIG. 3 illustrates an example of the hardware configuration of the base station apparatus 10 according to the present embodiment. The base station apparatus 10 includes one or more processors 11, a ROM 12, a RAM 13, an HDD or similar storage apparatus (storage) 14, and a communication device 15.

In the base station apparatus 10, a program for implementing each function of the base station apparatus 10 described below stored in the ROM 12, the RAM 13, and/or the storage 14 is executed by the processor 11 of the CPU of the like, for example. Note that the processor 11 may be substituted by one or more processors including an application specific integrated circuit (ASIC), a field-programmable gate array (FPGA), a digital signal processor (DSP), and the like. The communication device 15 is a communication interface for communicating with external apparatuses (external nodes such as the wireless APs, the control apparatus 20, and network nodes on the core network) under the control of the processor 11. The base station apparatus 10 may include a plurality of communication devices 15 with different connection destinations.

FIG. 4 illustrates an example of the functional configuration (software configuration) of the base station apparatus 10 according to the present embodiment. The base station apparatus 10 includes a first communication unit 401, a second communication unit 402, an SRS obtaining unit 403, a channel estimation unit 404, an RSRP calculation unit 405, and a weight generation unit 406. The SRS obtaining unit 403, the channel estimation unit 404, and the RSRP calculation unit 405 form an RSRP obtaining unit 410. These functional units of the base station apparatus 10 are implemented in the base station apparatus 10 by the processor 11 executing a program stored in the ROM 12, the RAM 13, and/or the storage 14, for example.

The first communication unit 401 controls the communication device 15 to communicate with one or more UEs (wireless terminals) using the plurality of dispersed APs (hereinafter, N wireless APs #1 to #N). In the present embodiment, the first communication unit 401 communicates, for each UE, with the UE using the wireless AP group (AP cluster) selected for the UE by the control apparatus 20 (external node) from among the wireless APs #1 to #N. The second communication unit 402 controls the communication device 15 to communicate with an external node such as the control apparatus 20, a network node on the core network, and the like.

The SRS obtaining unit 403 obtains the SRS signal transmitted from each UE and received by the wireless APs #1 to #N. For example, the SRS obtaining unit 403 receives (obtains), from each wireless AP, an I signal indicating the in-phase component and a Q signal indicating the orthogonal component of the signal which is obtained by converting the received SRS signal received by the wireless APs #1 to #N into a baseband signal.

The channel estimation unit 404 performs channel estimation on the basis of the received SRS signal obtained by the SRS obtaining unit 403. The channel estimation unit 404, on the basis of the received SRS signal, performs an estimation of the wireless channels between the UE (target UE #k) that is the signal transmission source and each one of the wireless APs #1 to #N to generate an estimated channel matrix including, as elements, estimation values of the respective wireless channels.

The RSRP calculation unit 405 obtains the RSRP information on the basis of the estimated channel matrix generated by the channel estimation unit 404. Specifically, the RSRP calculation unit 405 calculates the RSRP corresponding to each wireless channel on the basis of the estimation value of the wireless channel between the target UE #k and each one of the wireless APs #1 to #N (wireless AP #m) included in the estimated channel matrix so as to obtain the information (RSRP information) relating to the RSRP. If the estimation value (channel coefficient) of the wireless channel between the target UE #k and the wireless AP #m included in the estimated channel matrix is defined as h_{k,m}, the RSRP of the wireless AP #m with respect to the UE #k is obtained vis RSRP_{k,m}[dB] = 20log|h_{k,m}|, for example. Also, as the RSRP statistical information, the follow values may be used.
- The average value of RSRPs in a designated time window
- The median value of RSRPs in a designated time window
- Distribution in sections over a designated time window

In the processing for obtaining the RSRP information described above, the RSRP (in other words, the uplink RSRP) for each one of the wireless APs #1 to #N (wireless AP #m) is obtained. In the present embodiment, it is assumed that time division duplex (TDD) is applied. In this case, the reciprocity between the uplink wireless channel and the downlink wireless channel is used to obtain RSRP_{k,m} (m = 1, 2, ..., N) for each UE #k by using the uplink channel estimation value as the downlink channel estimation value. Note that the RSRP calculation unit 405 may calculate RSRP_{k,m} by calculating the received power on the basis of the received SRS signal by each wireless AP #m, that has been obtained by the SRS obtaining unit 403.

The weight generation unit 406 generates, on the basis of the estimated channel matrix generated by the channel estimation unit 404, the precoding weights for MIMO transmission using the AP cluster for the target UE #k. The first communication unit 401 provides weight information indicating the precoding weights generated by the weight generation unit 406 to the wireless APs #1 to #N so that downlink data transmission (MIMO transmission) for the corresponding UE #k is executed using the AP cluster.

### <Comparative Example>

FIG. 5 is a sequence diagram illustrating an example, which is shown as a comparative example for comparison with the present embodiment, of processing for obtaining the RSRP information for each UE on the basis of a synchronization signal (SS) transmitted from N wireless APs #1 to #N connected with the base station apparatus 10.

In the present comparative example, in communication with one or more UEs within a coverage area of N connected wireless APs #1 to #N, the base station apparatus 10 uses a wireless AP group (AP cluster) selected for each UE by the control apparatus 20 from among the wireless APs #1 to #N. The control apparatus 20 selects, on the basis of the RSRP information for each UE provided from the base station apparatus 10, the wireless AP group to use for the UE and transmits AP cluster information that indicates the AP cluster consisting of the wireless AP group to the base station apparatus 10. The base station apparatus 10 communicates with each UE using the AP cluster indicated by the AP cluster information received from the control apparatus 20.

For example, the base station apparatus 10 executes downlink communication with the UE as follows. First, in step S501, the wireless APs #1 to #N receive an SRS signal transmitted from a UE. In step S502, the wireless APs #1 to #N transmit the received SRS signal to the base station apparatus 10.

When the base station apparatus 10 receives the received SRS signal from each of the wireless APs #1 to #N, in step S503, the base station apparatus 10 performs channel estimation on the basis of the received SRS signal. Specifically, on the basis of the received SRS signal, the base station apparatus 10 performs estimation of wireless channels each between the corresponding UE and each one of the wireless APs #1 to #N to generate an estimated channel matrix including, as elements, estimation values of the respective wireless channels. Further, in step S504, the base station apparatus 10 generates, on the basis of the estimated channel matrix, precoding weights for MIMO transmission using an AP cluster consisting of the wireless AP group selected for the corresponding UE. In step S505, the base station apparatus 10 provides weight information indicating the generated precoding weights to the wireless APs #1 to #N so that downlink data transmission (MIMO transmission) for the corresponding UE is executed using the AP cluster (S506).

In the present comparative example, obtaining of the RSRP information for each UE is performed on the basis of a synchronization signal (SS) transmitted from each of the wireless APs #1 to #N. Specifically, in step S511, the wireless APs #1 to #N each transmit an SS. In the UE, this SS is used for the synchronization processing as well as obtaining the RSRP. In order for the UE to be able to obtain an RSRP between itself and each one of the wireless APs #1 to #N, the SSs transmitted from the wireless APs #1 to #N need to be orthogonal.

When the UE receives the SS transmitted from each one of the wireless APs #1 to #N (Step S511), the UE obtains the RSRP from the received SS. In the present comparative example, the UE performs, as channel estimation based on the SS, measurement (calculation) of an RSRP, which is a received power of the SS from each one of the wireless APs #1 to #N. In other words, the UE obtains an RSRP corresponding to the wireless channel between the UE and each one of the wireless APs #1 to #N.

In steps S512 and S513, the UE transmits a channel state information (CSI) report indicating the RSRPs (SS-RSRPs) obtained on the basis of the SSs to the base station apparatus 10 via the wireless AP #1, for example. When the base station apparatus 10 receives the CSI report (SS-RSRPs) from the UE, in step S514, the base station apparatus 10 transmits the CSI report (SS-RSRPs) to the control apparatus 20.

In step S515, on the basis of the RSRPs indicated by the CSI report received from the base station apparatus 10, the control apparatus 20 selects a wireless AP group for the corresponding UE to set an AP cluster consisting of the wireless AP group. Thereafter, in step S516, the control apparatus 20 transmits AP cluster information indicating the set AP cluster to the base station apparatus 10.

When the base station apparatus 10 receives the AP cluster information from the control apparatus 20, in step S517, the base station apparatus 10 updates the AP cluster set for the corresponding UE. Thereafter, the base station apparatus 10 uses the updated AP cluster to perform communication (downlink data transmission and uplink data reception) with the corresponding UE.

### <Processing Sequence Example>

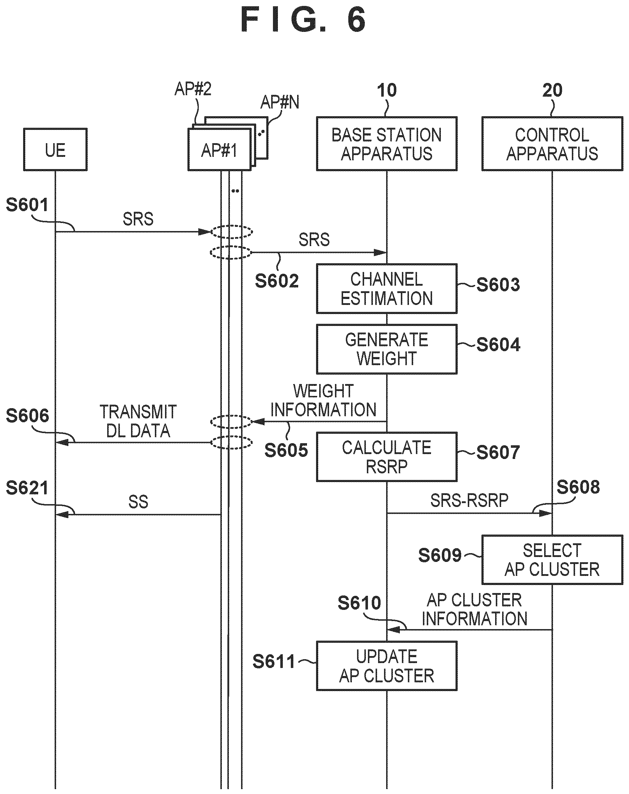

FIG. 6 is a sequence diagram illustrating an example of processing for obtaining the RSRP information for each UE according to the present embodiment. The difference from the comparative example (FIG. 5) described above is that an RSRP for each UE is obtained on the basis of an SRS signal transmitted from each UE without using a synchronization signal (SS).

In step S601, the wireless APs #1 to #N receive an SRS signal transmitted from a UE. In step S602, the wireless APs #1 to #N transmit the received SRS signal to the base station apparatus 10. The wireless APs #1 to #N, for example, may convert the received SRS signal into a baseband signal and transmit to the base station apparatus 10 an I signal indicating the in-phase component and a Q signal indicating the orthogonal component of the baseband signal.

When the base station apparatus 10 receives the received SRS signal from each of the wireless APs #1 to #N, in step S603, the base station apparatus 10 performs channel estimation on the basis of the received SRS signal. Specifically, on the basis of the received SRS signal, the base station apparatus 10 performs estimation of wireless channels each between the UE (target UE), that is the SRS signal transmission source, and each one of the wireless APs #1 to #N to generate an estimated channel matrix including, as elements, estimation values of the respective wireless channels. Further, in step S604, the base station apparatus 10 generates, on the basis of the estimated channel matrix, precoding weights for MIMO transmission using an AP cluster consisting of the wireless AP group selected for the target UE. In step S605, the base station apparatus 10 provides weight information indicating the generated precoding weight to the wireless APs #1 to #N so that downlink data transmission (MIMO transmission) for the target UE is executed using the AP cluster (S606).

Thereafter, in step S607, on the basis of the estimated channel matrix obtained through channel estimation in step S603, the base station apparatus 10 obtains the RSRP information for the UE (target UE), that is the SRS signal transmission source, through the processing described above using FIG. 4. In step S608, the base station apparatus 10 transmits the RSRP information (SRS-RSRPs) obtained on the basis of the SRS signal to the control apparatus 20 via the E2 interface.

In step S609, on the basis of the RSRPs indicated by the RSRP information received from the base station apparatus 10, the control apparatus 20 selects a wireless AP group for the target UE to set an AP cluster consisting of the wireless AP group. Thereafter, in step S610, the control apparatus 20 transmits AP cluster information indicating the set AP cluster to the base station apparatus 10.

When the base station apparatus 10 receives the AP cluster information from the control apparatus 20, in step S611, the base station apparatus 10 updates the AP cluster set for the corresponding UE. Thereafter, the base station apparatus 10 uses the updated AP cluster to perform communication (downlink data transmission and uplink data reception) with the corresponding UE.

Note that the base station apparatus 10, for example, causes a synchronization signal (SS) to be transmitted from any one of the wireless APs #1 to #N at a predetermined time interval (step S621). By causing the SS to be transmitted from any one of the wireless APs #1 to #N in this manner, the synchronization signal is shared between the wireless APs #1 to #N. In the present embodiment, the SS is used for synchronization processing and is not used for measuring the RSRP in the UE.

According to the present embodiment, the RSRP information (SRS-RSRPs) can be sent from the base station apparatus 10 to the control apparatus 20 (Near-RT RIC) via the E2 interface. Relating to such an SRS-RSRP notification, as a notification using 5G Performance Measurements information, for example, a description (No. 5.1.22.4) such as that described below can be added to Section 5.1.22 of 3GPP TS28.552.

| |
|---|
| 5.1.1.22 RSRP Measurement |
| ... |
| 5.1.1.22.1 SS-RSRP distribution per SSB |
| ... |
| 5.1.1.22.2 SS-RSRP distribution per SSB of neighbor NR cell |
| ... |
| 5.1.1.22.3 RSRP distribution per neighbor E-UTRAN cell |
| ... |
| 5.1.1.22.4 SRS-RSRP distribution per UE |
| *a.* This measurement provides the distribution of SRS-RSRP per UE measured in the cell. |
| b. CC (Cumulative Counter) |
| c. This measurement is obtained by incrementing the appropriate measurement bin using measured quantity value (See Table 10.1.6.1-1 in TS 38.133 [35]) |
| d. Each subcounter is an integer. |
| e. L1M.SRS-RSRP Bin where Bin represents the range of reported SRS-RSRP value (0 to 127 dBm) NOTE: Number of bins and the range for each bin is left to implementation |
| f. APcluster |
| g. Valid for packet switched traffic |
| h. 5GS |
| i. One usage of this performance measurements is to support AP clustering |

As described above, the base station apparatus 10 according to the present embodiment includes a communication unit that communicates with one or more UEs using a plurality of connected wireless APs. The communication unit communicates, for each UE, with the UE using a wireless AP group (AP cluster) selected for the UE by the control apparatus 20 (external node) from among the plurality of wireless APs. The base station apparatus 10 obtains, for each UE, information (RSRP information) relating to an RSRP corresponding to a wireless channel between the UE and each one of the plurality of wireless APs, on the basis of an SRS signal transmitted from the UE and received by each of the plurality of wireless APs. The base station apparatus 10 notifies the control apparatus 20 (external node) of the obtained RSRP information for each UE. In this manner, according to the present embodiment, it becomes possible for the base station apparatus 10 using the plurality of wireless APs to obtain the RSRP for each UE without using a synchronization signal (SS), and to send the RSRP information relating to the RSRP to the control apparatus 20 (external node).

### Other Embodiments

A remote control apparatus according to the embodiments described above can be implemented by a computer program for causing a computer to function as a remote control apparatus. The computer program can be stored on a computer-readable storage medium and distributed or can be distributed via a network.

Note that the present invention can notify an external node that controls CF-mMIMO communication for a base station apparatus using a plurality of wireless APs of RSRP information, for example, and thus can contribute to Goal 9 relating to "building infrastructure for industry and innovation" of the Sustainable Development Goals (SDGs) founded by the United Nations.

The invention is not limited to the foregoing embodiments, and various variations/changes are possible within the spirit of the invention.

The present application claims priority from Japanese Patent Application No. 2022-143898 filed on September 9, 2022, which is hereby incorporated by reference herein.

## Claims

1. A base station apparatus connected to a plurality of wireless access points (APs), comprising:
communication means for communicating with one or more wireless terminals using the plurality of wireless APs, the communication means communicating, for each wireless terminal, with the wireless terminal using a wireless AP group selected for the wireless terminal by an external node from among the plurality of wireless APs;
obtaining means for obtaining, for each wireless terminal, information relating to a reference signal received power (RSRP) corresponding to a wireless channel between the wireless terminal and each of the plurality of wireless APs on a basis of a sounding reference signal (SRS) transmitted from the wireless terminal and received by the plurality of wireless APs; and
notification means for notifying the external node of the information, obtained by the obtaining means, relating to the reference signal received power for each wireless terminal.

2. The base station apparatus according to claim 1, wherein
the obtaining means, for each wireless terminal, on a basis of the SRS signal, estimates a channel matrix between the wireless terminal and the plurality of wireless APs and obtains the information relating to the reference signal received power on a basis of the obtained estimated channel matrix.

3. The base station apparatus according to claim 2, wherein
the obtaining means calculates a reference signal received power corresponding to each wireless channel on a basis of an estimation value, included in the estimated channel matrix, of a wireless channel between a corresponding wireless terminal and each one of the plurality of wireless APs.

4. The base station apparatus according to claim 2 or 3, wherein
the estimated channel matrix is used to obtain the information relating to the reference signal received power and is used to generate a precoding weight for MIMO transmission using the wireless AP group.

5. The base station apparatus according to any one of claims 1 to 4, wherein the communication means causes a synchronization signal to be transmitted from any one of the plurality of wireless APs so that the synchronization signal is shared between the plurality of wireless APs, the synchronization signal being not used for RSRP measurement in a wireless terminal.

6. The base station apparatus according to any one of claims 1 to 5, wherein
the information relating to the reference signal received power notified to the external node by the notification means is used for selecting a wireless AP by the external node.

7. The base station apparatus according to claim 6, wherein
the communication means receives, from the external node, AP group information indicating a wireless AP group selected on a basis of the information relating to the reference signal received power and uses the wireless AP group indicated by the AP group information to communicate with a corresponding wireless terminal.

8. The base station apparatus according to any one of claims 1 to 7, wherein
the external node is installed with a Near-RT RIC (Near-Real Time RAN Intelligent Controller) in O-RAN (Open RAN),
the base station apparatus is installed with an O-DU (O-RAN Distributed Unit) or an O-CU (O-RAN Central Unit) in O-RAN, and
the notification means notifies the external node of the information relating to the reference signal received power via an E2 interface of O-RAN.

9. A control method for a base station apparatus connected to a plurality of wireless access points (APs), comprising:
communicating with one or more wireless terminals using the plurality of wireless APs including communicating, for each wireless terminal, with the wireless terminal using a wireless AP group selected for the wireless terminal by an external node from among the plurality of wireless APs;
obtaining, for each wireless terminal, information relating to a reference signal received power (RSRP) corresponding to a wireless channel between the wireless terminal and each of the plurality of wireless APs on a basis of a sounding reference signal (SRS) transmitted from the wireless terminal and received by the plurality of wireless APs; and
notifying the external node of the obtained information relating to the reference signal received power for each wireless terminal.

10. A program for causing a computer provided in a base station apparatus to execute the control method according to claim 9.
